# EUROPÄISCHE PATENTANMELDUNG

(11) **EP 3 961 049 A1**
(43) Veröffentlichungstag der Anmeldung: **02.03.2022**
(21) Anmeldenummer: 21189305.2
(22) Anmeldetag: 03.08.2021
(51) Int. Cl.: F16B 12/24, F16B 12/26

(54) **VERBINDUNGSVORRICHTUNG ZUM UNLÖSBAREN ZUSAM-MENGEFÜGEN INSBESONDERE VON HOLZBAUTEILEN**

(30) Priorität: 25.08.2020 IT 202000020404
(71) Anmelder: RH Srl/GmbH, 39039 Villabassa (IT)
(72) Erfinder: KAMELGER, Hartwig, 39039 Niederdorf (IT)
(74) Vertreter: Ausserer, Anton

(57) **Zusammenfassung**

Die Erfindung betrifft eine Verbindungsvorrichtung zwischen zwei Bestandteilen (300), umfassend einen Hohlkörper (100), der sich längs einer Längsachse zwischen einem ersten Ende einer Basis (101) zur Aufnahme in einem ersten, in einem ersten Bestandteil ausgenommenen Sitz und einem zweiten einen Kopf (104) bildenden Ende zur Aufnahme in einem zweiten, in einem zweiten Bestandteil ausgenommenen Sitz erstreckt, von denen mindestens eine hinterschnittene Form aufweist,
- wobei die Verbindungsvorrichtung (300) ein Aktivierungselement (200) umfasst, wobei der Hohlkörper in seiner Basis eine Öffnung zur Einführung des Aktivierungselementes (200) zur Aufnahme des Aktivierungselementes innerhalb des Hohlkörpers (100) aufweist, wobei das Aktivierungselement durch ein erstes mit dem Hohlkörper (100) fest verbundenes Ende und ein zweites einen Kopf aufweisendes Ende gebildet ist, wobei der Kopf (204) des Aktivierungselementes über ein elastisches Element (203) mit der Basis (201) des mit dem Hohlkörper (100) festverbundenen Aktivierungselementes, verbunden ist, wobei der Kopf (104) des Hohlkörpers fähig ist, komprimiert und/oder gespreizt zu werden und der Kopf (204) des Aktivierungselementes eine Oberfläche aufweist, die gegenüber der Achse des Hohlkörpers geneigt ist und einer Oberfläche des Hohlkörpers (100) gegenüberliegt

## Beschreibung

Die vorliegende Erfindung bezieht sich auf eine Verbindungsvorrichtung zum unlösbaren Zusammenfügen insbesondere von Holzbauteilen gemäß dem Oberbegriff des Anspruches 1.

Verbindungen für Möbel dieser Art sind weitgehend bekannt und werden verbreitet verwendet.

Für die Verbindung von Möbelteilen wird häufig eine rasche, unlösbare Verbindung während der Montage verlangt, die eine sichere Befestigung mit Gewährleistung der Halterung ermöglicht.

Das Dokument EP 1 990 549 A1 beschreibt zum Beispiel ein Verbindungsmittel und ein Verfahren zur Herstellung einer Verbindung eines ersten Bauteiles und eines zweiten Bauteils. Diese Verbindung wird durch zwei Verbindungselemente ausgeführt, die miteinander befestigbar und mittels eines dafür vorgesehenen Halteelementes lösbar sind. Dieses vorgeschlagene Verbindungsmittel ist dabei aufwändig bei seiner Herstellung und kompliziert bei der Montage unter Erfordernis von geeigneten Montagewerkzeugen.

Das Dokument EP 0 321 062 offenbart eine Holzverbindung von mindestens zwei Holzelementen, die mit Kleber zusammengefügt sind und Bohrungen aufweisen, die in der befestigten Stellung der Verbindung ausgerichtet sind, um Kupplungsdorne aufzunehmen. Ein Abstandsstück ist zwischen den Holzelementen angepasst und erstreckt sich längs eines begrenzten Teils der Grenzfläche der zu verbindenden Elemente. Zwischen dem Umfang des Abstandstückes und dem Abstandsstück der zu verbindenden Elemente weist der eingebrachte Kleber eine Dicke auf, die größer ist als die Grenzfläche, die durch das Abstandsstück festgelegt wird. Diese Verbindung erfordert daher ein Abstandsstück und eine komplizierte Anbringung des Klebers.

Das Dokument US 3,183,298 beschreibt einen Dübel zur Verbindung von zwei Holzgliedern, von denen jedes zu einander ausgerichtete Bohrungen zur Aufnahme des Dübels aufweist. Der Dübel weist konische Abschnitte auf, die sich jeweils am dem Dübel abgewandten Ende in den entsprechenden Bohrungen der Holzglieder spreizen. Dieser Dübel gewährleistet nicht ein sicheres gegenseitiges Einhaken zwischen den beiden Gliedern und ist nicht im Stande die beiden Holzglieder gegenseitig zu belasten, was für das Zusammendrücken einer zwischen den beiden Gliedern eingebrachten Klebeschicht nützlich ist.

Weitere Möbelverbindungen sind in den Veröffentlichungen EP 0 321 062, US 569,235, US 5,131,783 und US 8,186,124 beschrieben. Alle diese Veröffentlichungen erlauben keine gegenseitige Vorspannung zwischen den beiden zu verbindenden Elementen.

Die DE 72 31 950 U beschreibt einen Möbelverbinder, der eine äußere Gewindefläche und ein schnappartiges Innenelement aufweist um die beiden Gewindeteile miteinander zu verbinden. Dieser Möbelverbinder muss innerhalb des Möbels aufgeschraubt werden und ist daher komplex in der Verwendung.

Aus der DE 299 22 524 ist ein Verbinder für Regalböden bekannt. Dieser erlaubt nur ein einrasten und sichert nicht gegen einen Auszug.

Die Aufgabe der vorliegenden Erfindung ist daher die Ausführung einer Verbindung von zwei Elementen mit unlösbarer Arretierung in der Fügestellung, wobei eine hohe Stabilität und eine Zugkraft zwischen den beiden Möbelteilen gewährleistet werden.

Diese Aufgabe wird durch eine Verbindungsvorrichtung mit den Merkmalen des Oberbegriffes des Patentanspruches 1 gelöst.

Es wird daher eine Verbindungsvorrichtung zwischen zwei Bauteilen vorgeschlagen, umfassend:
einen Hohlkörper, der sich längs einer Längsachse zwischen einem ersten Ende zur Aufnahme in einem ersten, in einem ersten Bauteil ausgenommenen Sitz und einem zweites Ende zur Aufnahme in einem zweiten, in einem zweiten Bauteil ausgenommenen Sitz erstreckt, von denen mindestens eine hinterschnittene Form aufweist,
wobei die Verbindungsvorrichtung ein Aktivierungselement umfasst, wobei der Hohlkörper an einem seiner Enden eine Öffnung zur Einführung des Aktivierungselementes zur Aufnahme des Aktivierungselementes innerhalb des Hohlkörpers aufweist, wobei das Aktivierungselement durch ein erstes mit dem Hohlkörper fest verbundenes Ende und ein zweites einen Kopf aufweisendes Ende gebildet ist, wobei der Kopf über ein elastisches bevorzugter Weise faltenbalgartig ausgebildetes Element verbunden ist, wobei der Hohlkörper an einem Ende einen Kopf aufweist,
der fähig ist zusammengedrückt und/oder gespreizt zu werden.

Erfindungsgemäß weist das Aktivierungselement am Kopf eine Oberfläche auf, die gegenüber der Achse des Hohlkörpers geneigt ist und einer Oberfläche des Hohlkörpers gegenüberliegt.

Während der Einführung des Kopfes des Hohlkörpers in den hinterschnittenen Hohlkörperkopf aufweisende Sitz ist durch mindestens zwei Laschen gebildet, die an ihren freien enden jeweils eine in Richtung des Endes geneigte Fläche aufweisen und das Aktivierungselement wird zusammen gedrückt, da es an einer Oberfläche des, den Sitz insbesondere das faltenbalgartige Element aufweisenden Bauteils anschlägt und die geneigte Fläche des Kopfes des Aktivierungselementes wird in Richtung der Mitte des Hohlkörpers verschoben.

Der Kopf des Aktivierungselementes befindet sich vorteilhafter Weise zwischen einer Oberfläche eines Bauteils, in die die Verbindungsvorrichtung und insbesondere der Hohlkörper der Verbindungsvorrichtung eingebracht wird. Zufolge der Pressung beim Einbringen der Vorrichtung, insbesondere des Hohlkörpers in den Sitz wird das Aktivierungselement zusammengedrückt und der Kopf wird in Richtung der Mitte des Hohlkörpers dank der gegenüberliegenden Oberfläche mit einer Oberfläche des Hohlkörpers bevorzugter Weise geneigt geschoben. Im Moment wo das Aktivierungselement für einen bestimmten Abstand in Richtung der Mitte des Hohlkörpers geschoben wird, schnappt dieser ein und springt in die Arretierungsstellung. Wobei in der ersten Stellung und in der zweiten Stellung (Arretierungsstellung) vorzugsweise an der Innenfläche des Kopfes des Hohlkörpers angeordnete Nut /Rille vorhanden ist um das Aktivierungselement in Position zu führen und/oder zu halten.

In dieser Stellung ist der Kopf des Hohlkörpers vollständig im Sitz des Bauteiles eingebracht und der Kopf des Aktivierungselementes ist in seine Endstellung gesprungen, wo er eine eventuelle Komprimierung des Kopfes des Hohlkörpers festlegt und bevorzugter Weise über eine an der Innenfläche des Kopfes des Hohlkörpers angeordnete Nut in der Endstellung geführt wird. Dieses Einschnappen des Aktivierungselementes wird dank des elastischen Elementes gewährleistet, das bevorzugter Weise ein faltenbalgartiges Element ist, das den Kopf des Aktivierungselementes spannt und nachdem es in eine mittige Stellung gebracht wurde, es in seine Endstellung drückt. Dank dieses Einschnappens erkennt der Benutzer, dass sich die Verbindungsvorrichtung in ihrer Endstellung befindet.

Weitere Merkmale und Einzelheiten gehen aus den Patentansprüchen und aus der folgenden Beschreibung von in der beigefügten Zeichnung dargestellten Ausführungsformen hervor. Es zeigen:
- Figur 1: eine perspektivische Ansicht der erfindungsgemäßen Verbindungsvorrichtung,
- Figur 2: eine perspektivische Ansicht des Aktivierungselementes der erfindungsgemäßen Verbindungsvorrichtung,

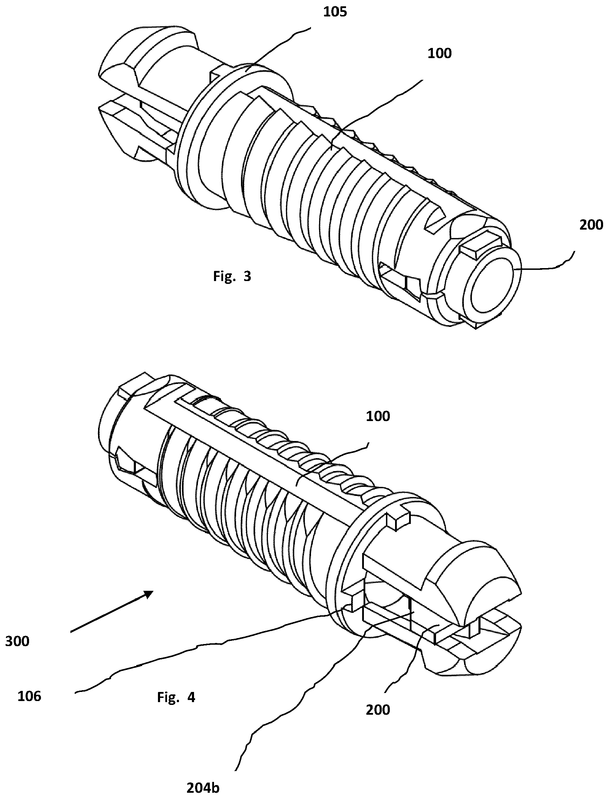

- Figur 3: eine perspektivische hintere Ansicht der erfindungsgemäßen Verbindungsvorrichtung,
- Figur 4: eine perspektivische hintere Ansicht der erfindungsgemäßen Verbindungsvorrichtung,

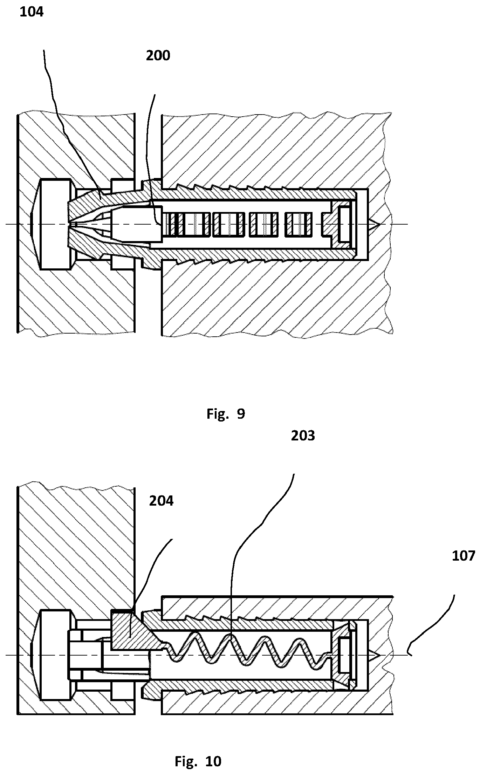

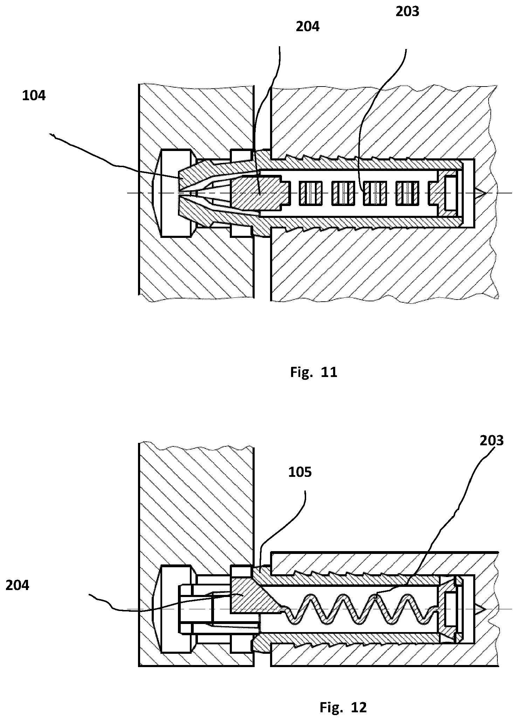

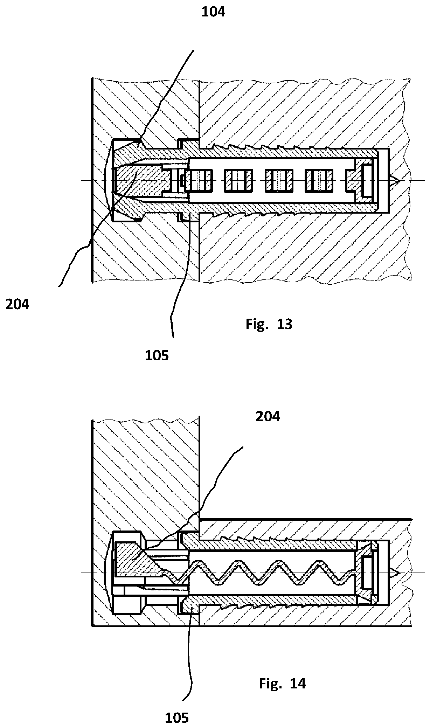

- Figur 5 bis 14: Ansichten im Schnitt der Verbindungsvorrichtung während der Einbringung,

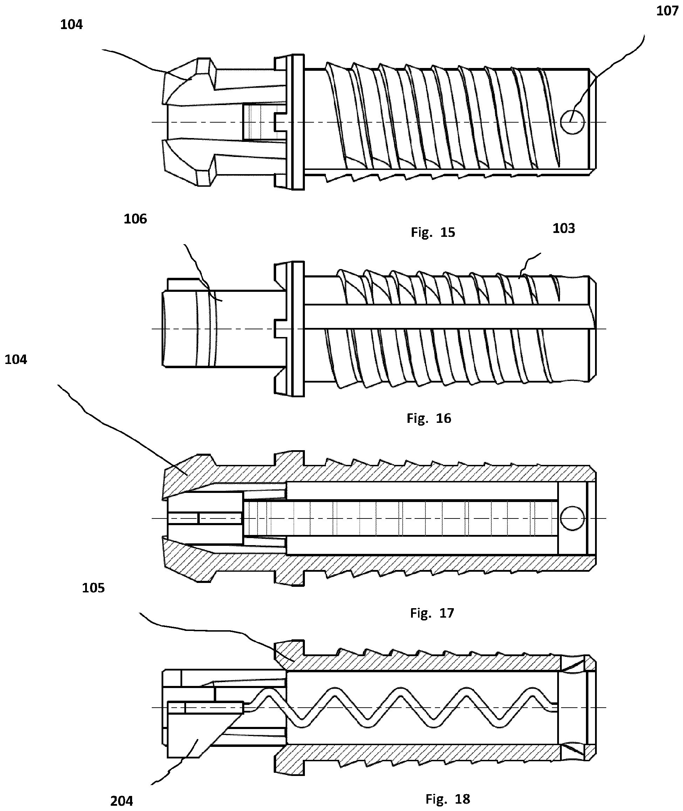

- Figur 15: eine Seitenansicht der erfindungsgemäßen Vorrichtung,
- Figur 16: eine Seitenansicht der erfindungsgemäßen Vorrichtung in einer teilweise geschnittenen Stellung,
- Figur 17: eine Seitenansicht der geschnittenen Vorrichtung gemäß der Erfindung,
- Figur 18: einen seitlichen Schnitt von Figur 17, um 90 Grad gedreht, und

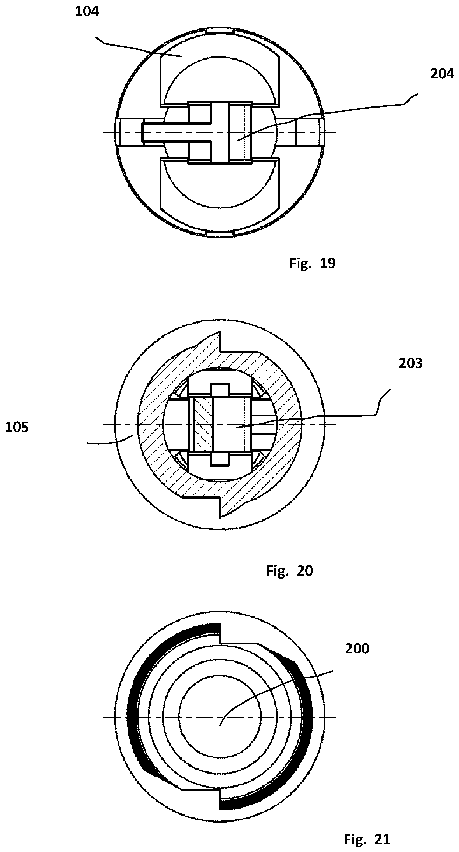

- Figur 19, 20 und 21: stirnseitige Schnittstellen einer erfindungsgemäßen Vorrichtung auf verschiedenen Höhen.

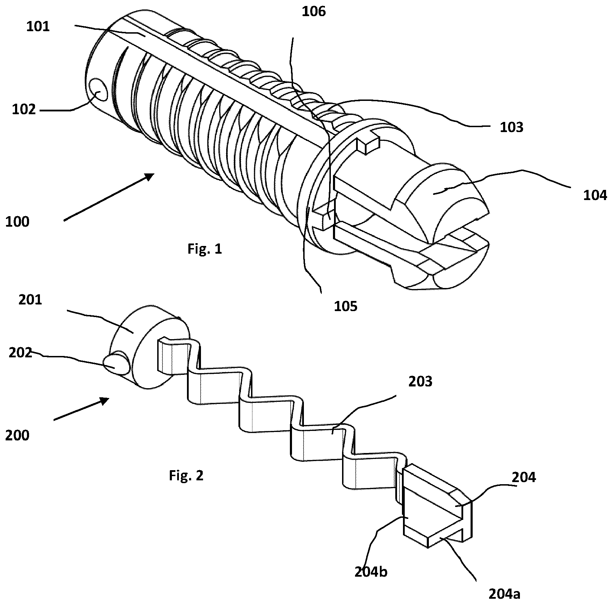

Figur 1 zeigt die Gesamtheit einer erfindungsgemäßen Verbindungsvorrichtung, angegeben mit der Bezugsziffer 300. Die erfindungsgemäße Verbindungsvorrichtung 300 umfasst einen Hohlkörper 100. Dieser Hohlkörper 100 weist eine hohle Form und zwei Enden auf, von denen eines einen Kopf 104, der zwei zusammendrückbare und voneinander spreizbare Teile aufweist und aus zwei Laschen und einer Basis 101 besteht. Die Verbindungsvorrichtung umfasst überdies ein Aktivierungselement 200, das aus einer Basis 201 gebildet ist, das bevorzugter Weise eine Erhebung 202 aufweist, die fähig ist in den Hohlkörper 100 insbesondere in eine Öffnung 102 eingeführt zu werden, die in der Basis 101 des Hohlkörpers 100 angeordnet ist. Das Aktivierungselement 200 weist zudem ein elastisches bevorzugter Weise faltenbalgartiges Element 203 auf, das den Kopf 204 des Aktivierungselementes 200 mit der Basis 201 des Aktivierungselementes 200 verbindet. Diese Ausbildung der einzelnen Teile der Verbindungsvorrichtung 300 ist besonders vorteilhaft, da sie eine schnelle Montage erlaubt. Das Aktivierungselement 200 wird über eine Öffnung in der Basis 101 des Hohlkörpers 100 eingeführt und im Moment wo sie sich in der richtigen Stellung befindet, fügt sich die Erhebung 201 auf der Basis 201 des Aktivierungselementes 200 in die Öffnung 102 des Hohlkörpers ein und bildet zwischen der Basis 201 des Aktivierungselementes 200 und der Basis des Hohlkörpers 101 eine feste Verbindung.

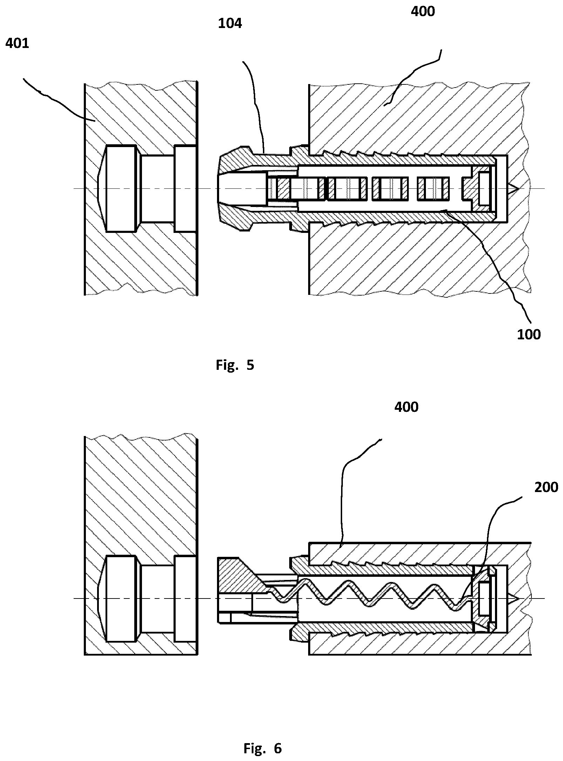

Der Kopf des Aktivierungselementes 204 weist eine geneigte Fläche 204b gegenüber der Achse des Hohlkörpers 100 auf und ist einer Fläche 106 des Hohlkörpers gegenüberliegend. In Figur 5 ist ein erster Schritt für die Verbindung von zwei Bauteilen, bevorzugter Weise Holzbauteilen erläutert. In einem ersten Schritt wird die Basis 101 des Hohlkörpers in einen Sitz des ersten Bauteils 400 eingeführt. Die Außenfläche des Hohlkörpers 100 der Verbindungsvorrichtung 300 weist bevorzugter Weise Klemmelemente 103 bevorzugter Weise in Gewindeform auf. Diese Klemmelemente 103 sind bevorzugter Weise einseitig gerichtet ausgebildet, das bedeutet, sie erlauben eine leichte Einbringung, sperren jedoch dann einen eventuellen Auszug aus dem Sitz des Bauteils 400. Die Verbindungsvorrichtung wird in den ersten Sitz vorteilhafter Weise eingebracht bis ein auf der Außenfläche des Hohlkörpers 100 angeordneter Ringwulst 105 dem Benutzer zu verstehen gibt, dass die Verbindungsvorrichtung 300 richtig und genügend in der Tiefe eingebracht ist. Während dieses ersten Schrittes wird das Aktivierungselement nicht gespannt.

Der Ringwulst 105 kann in einer bevorzugten Ausführungsform der Art ausgebildet sein, dass eine Hülse/Adapter mit dem Ringwulst 105 gekoppelt werden kann und auf diese Weise für das Aufschrauben und/oder den Auszug der Verbindungsvorrichtung im Sitz ohne Hinterschneidung verwendet werden kann. Auf diese Art und Weise kann die Verbindungsvorrichtung 300 leichter und sicherer befestigt werden.

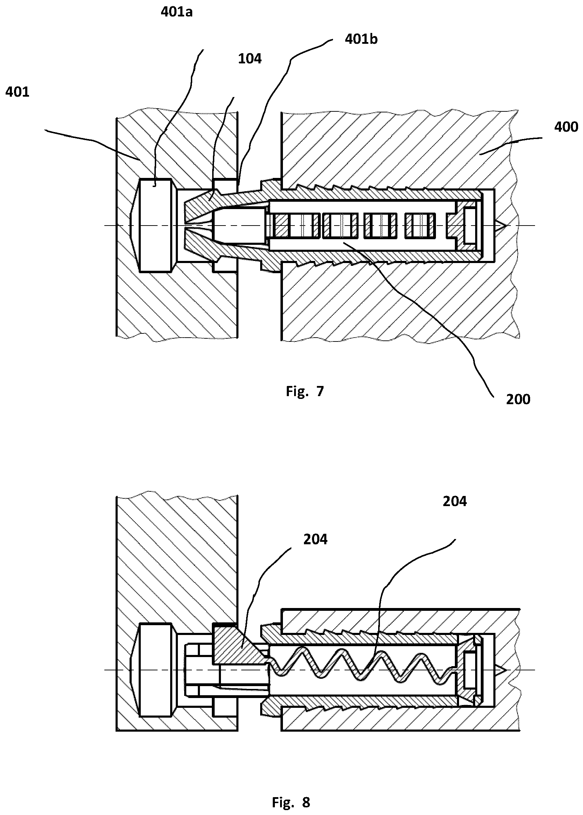

Während des in Figur 7 erläuterten zweiten Schrittes wird der Kopf der Verbindungsvorrichtung 300 in den Sitz des zweiten Bauteils 401 eingebracht. Während der Einbringung werden die beiden Laschen des Kopfes 104 des Hohlkörpers 100 zusammen gedrückt.

Gleichzeitig mit der Einbringung des Kopfes 104 in den Sitz des zweiten Bauteiles 401 wird der Kopf des Aktivierungselementes 204 gegen eine Außenfläche gegenübergestellt und auf diese Weise wird das Aktivierungselement 300 insbesondere das elastische Element 203 komprimiert, das bevorzugter Weise faltenbalgartig ausgeführt ist. Während der Komprimierung des Aktivierungselementes 200 weist der Kopf des Aktivierungselementes 300 eine geneigte Fläche auf, die einer Fläche des Hohlkörpers 100, bevorzugter Weise einer Fläche 106 des Ringwulsts 105 zum Gegenüberliegen kommt. Zur Folge dieses Kontaktes zwischen der geneigten Fläche des Kopfes des Aktivierungselementes 201 und einer geneigten Fläche des gegenüberliegenden Hohlkörpers wird der Kopf 204 des Aktivierungselementes 300 in Richtung der Mitte des Hohlkörpers insbesondere in Richtung der Achse 107 des Hohlkörpers 100 verschoben.

Während des Einbringens kommt der Kopf des Aktivierungselementes zu einer Stelle wo er nicht mehr einer Außenfläche gegenüberliegt, die das Aktivierungselement 200 zusammen drückt, da durch die geneigte Fläche der Kopf 204 ins Innere verstellt wurde und im Moment wo der Kopf 204 sich von der Arretierung befreit, da er dank der geneigten Fläche in Richtung der Mitte und mit der Kompressionskraft verschoben wurde, schnappt er nach vorne ein und spreizt den Kopf des Hohlkörpers 104 und klemmt den Kopf 104 unter Vermeidung auf dieser Weise einer neuen Kompression.

Dies geschieht besonders vorteilhaft wenn der Sitz im zweiten Bauteil 401 einen ersten Teil derselben Höhe und Breite aufweist wie der äußere Ringwulst 105 des Hohlkörpers und eine Ausnehmung aufweist, worin die Laschen des Kopfes 104 des Hohlkörpers eingeführt werden können.

Dank des Sitzes, der Platz für den Ringwulst 105 des Hohlkörpers aufweist, ist die Verbindungsvorrichtung 300 versenkbar und von außen nicht sichtbar und dank der bevorzugter Weise eigens zwischen dem ersten und den zweiten Bauteil 400, 401 gebildeten Sitze der Bauteile 400 und 401 sind keine Risse oder nur sehr kleine Risse vorhanden.

Am Ende der Einführung, auch wenn die Verbindung mit einer Kraft dank des elastischen Elementes 203 des Aktivierungselementes 200 belastet wird, wird der Kopf 204 des Hohlkörpers 200 immer in Position zurück gebracht, da bei einem Versuch des Auszuges der Verbindungsvorrichtung 300, wird das Aktivierungselement 300 zusammen gedrückt und, falls die Verbindungsvorrichtung 300 nicht mehr einer Kraft ausgesetzt ist, bringt das Aktivierungselement 200 die Verbindungsvorrichtung wieder in ihre Anfangsposition 300 zurück.

Die erfindungsgemäße Vorrichtung kann vollständig aus Kunststoff aufgrund ihrer Ausbildung und Geometrie hergestellt werden, was eine leichte und rasche Montage und eine wirtschaftliche Massenherstellung ermöglicht.

Bei Verbindungen von Elementen und/oder Bauteile großer Abmessungen könnten die Einzelteile der Verbindungsvorrichtung 300, zum Beispiel das elastische Element 203 und/oder die gesamte Verbindungsvorrichtung auch in Metall hergestellt werden. Auf diese Art und Weise könnte die Verbindungsvorrichtung 300 auch eine Halterung für große Lasten sicherstellen.

Die Sitze der Bauteile können zum Beispiel mittels einer Fräsmaschine CNC oder einer tragbaren Fräse bekannter Art ausgeführt werden, die präzise insbesondere den Sitz im zweiten Bauteil 401 bildet, der eine hohe Präzision erfordert.

Vorteilhafter Weise weist der Kopf des Aktivierungselementes 104 einen T- förmigen Querschnitt auf.

Zahlreich sind die Möglichkeiten Varianten und Vorschläge zu liefern, die am Schutzbereich des erfindungsgemäßen Gegenstandes vorgenommen werden können, der in den folgenden Patentansprüchen definiert ist. Die einzelnen Schritte des erfindungsgemäßen Verfahrens können in ihrer Reihenfolge geändert werden ohne deshalb den Schutzbereich der Erfindung zu verlassen.

### Liste der Bezugsziffern

300 Verbindungsvorrichtung
100 Hohlkörper
101 Basis des Hohlkörpers
102 Öffnungen des Hohlkörpers
103 Arretierelemente/Gewinde
104 Kopf des Hohlkörpers
105 Ringwulst
106 geneigte Fläche
107 Achse des Hohlkörpers
200 Aktivierungselement
201 Basis des Aktivierungselementes
202 Erhebung
203 elastisches Element bevorzugter Weise faltenbalgartig
204 Kopf des Aktivierungselementes
204a Stirnfläche des Kopfes des Aktivierungselementes
204b geneigte Fläche des Kopfes des Aktivierungselementes
400 erstes Bauteil
401 zweites Bauteil
401a Hinterschneidung des Sitzes des zweiten Bauteiles
401b erster erweiterter Teil des Sitzes des zweiten Bauteiles

## Patentansprüche

1. Verbindungsvorrichtung zwischen zwei Bauteilen (300), umfassend
- einen Hohlkörper (100), der sich längs einer Längsachse zwischen einem ersten Ende einer Basis (101) zur Aufnahme in einem ersten, in einem ersten Bauteil ausgenommenen Sitz und einem zweiten einen Kopf (104), der zwei zusammendrückbare und voneinander spreizbare Teile aufweist, bildenden Ende zur Aufnahme in einem zweiten, in einem zweiten Bauteil ausgenommenen Sitz erstreckt, von denen mindestens eine hinterschnittene Form aufweist,
- wobei die Verbindungsvorrichtung (300) ein Aktivierungselement (200) umfasst, wobei der Hohlkörper in seiner Basis eine Öffnung zur Einführung des Aktivierungselementes (200) zur Aufnahme des Aktivierungselementes innerhalb des Hohlkörpers (100) aufweist, wobei das Aktivierungselement durch ein erstes mit dem Hohlkörper (100) fest verbundenes Ende eine Basis (201) und ein zweites einen Kopf (204) bildendes Ende des Aktivierungselementes gebildet ist, wobei der Kopf (204) des Aktivierungselementes über ein elastisches Element (203) mit der Basis (201) des mit dem Hohlkörper (100) fest verbundenen Aktivierungselementes verbunden ist, wobei der Kopf (104) des Hohlkörpers fähig ist, komprimiert und/oder gespreizt zu werden und der Kopf (204) des Aktivierungselementes eine Oberfläche (204b) aufweist, die gegenüber der Achse des Hohlkörpers geneigt ist und einer Oberfläche des Hohlkörpers (100) gegenüberliegt.

2. Verbindungsvorrichtung zwischen zwei Bauteilen (300) nach Anspruch 1, **dadurch gekennzeichnet, dass** das elastische Element (203) faltenbalgartig ausgebildet ist.

3. Verbindungsvorrichtung zwischen zwei Bauteilen (300) nach Anspruch 1 oder 2, **dadurch gekennzeichnet, dass** der Hohlkörper einen Ringwulst (105) aufweist.

4. Verbindungsvorrichtung zwischen zwei Bauteilen (300) nach Anspruch 3, **dadurch gekennzeichnet, dass** der Ringwulst (105) eine Oberfläche (106) aufweist, die der geneigten Oberfläche (204b) des Kopfes des Aktivierungselementes (204) gegenüberliegt.

5. Verbindungsvorrichtung zwischen zwei Bauteilen (300) nach Anspruch 4, **dadurch gekennzeichnet, dass** die Oberfläche (106) des Ringwulstes (105), die der geneigten Oberfläche (204b) des Kopfes des Aktivierungselementes (204) gegenüberliegt, geneigt ist.

6. Verbindungsvorrichtung zwischen zwei Bauteilen (300) nach Anspruch 2, 3 oder 4, **dadurch gekennzeichnet, dass** der Ringwulst (105) den Sitz für eine Hülse und/oder einen Adapter bildet um die Einführung und/oder den Auszug der Verbindungsvorrichtung (300) zu erleichtern.

7. Verbindungsvorrichtung zwischen zwei Bauteilen (300) nach einem der vorstehenden Ansprüche, **dadurch gekennzeichnet, dass** der Kopf des Aktivierungselementes (204) eine Oberfläche (204a) zur Bildung eines zeitweisen Anschlages für das Aktivierungselement aufweist.

8. Verbindungsvorrichtung zwischen zwei Bauteilen (300) nach einem der vorstehenden Ansprüche, **dadurch gekennzeichnet, dass** der Kopf des Aktivierungselementes (204) einen T- förmigen Querschnitt aufweist.

9. System für die Verbindung von zwei Bauteilen, umfassend eine Vorrichtung nach einem der vorstehenden Patentansprüche, **dadurch gekennzeichnet, dass** die beiden Bauteile (400, 401) jeweils mindestens einen Sitz aufweisen, von denen mindestens ein Sitz hinterschnitten ist.

10. System für die Verbindung von zwei Bauteilen, nach Anspruch 8, **dadurch gekennzeichnet, dass** der hinterschnittene Sitz einen ersten breiteren Teil zur Aufnahme des Ringwulstes (105) des Hohlkörpers (100) der Verbindungsvorrichtung (300) aufweist.
